# EUROPEAN PATENT APPLICATION

(11) **EP 3 485 743 A1**
(43) Date of publication of application: **22.05.2019**
(21) Application number: 17202881.3
(22) Date of filing: 21.11.2017
(51) Int. Cl.: A23L 33/10, A23K 20/163, A23K 10/14, A23L 33/145, A23L 33/21, A23L 33/125

(54) **ENDOGLUCANASE-TREATED GLUCANS**

(71) Applicant: Ohly GmbH, 22041 Hamburg (DE)
(72) Inventor: Krüger, Dina, 20253 Hamburg (DE); Mariët van der Werf, 22397 Hamburg (DE); Bedford, Mike, Marlborough, Wiltshire SN8 1QJ (GB); Walk, Carrie, Sinderby, Thirsk YO7 4JB (GB)
(74) Representative: Uexküll & Stolberg

(57) **Abstract**

The present invention relates to an edible or drinkable composition that comprises endoglucanase-treated beta-1,3:1,6 glucans. The composition is particularly suitable for use in a method of improving the immune status of a mammalian or non-mammalian. The present invention further relates to a method for increasing the feed conversion ratio and/or increasing body weight in a non-human animal, comprising feeding the non-human animal with an edible or drinkable composition that comprises endoglucanase-treated yeast beta-1,3:1,6 glucans. In a still further aspect, the invention relates to the use of an edible or drinkable composition comprising that comprises endoglucanase-treated yeast beta-1,3:1,6 glucans for improving the immune status of a mammalian or non-mammalian. Finally, the invention relates to the use of an edible or drinkable composition that comprises endoglucanase-treated yeast beta-1,3:1,6 glucans for decreasing the feed conversion ratio and/or increasing body weight in a non-human animal.

## Description

The present invention relates to an edible or drinkable composition that comprises endoglucanase-treated beta-1,3:1,6 glucans. The composition is particularly suitable for use in a method of improving the immune status of a mammalian or non-mammalian. The present invention further relates to a method for decreasing the feed conversion ratio and/or increasing body weight in a non-human animal, comprising feeding the non-human animal with an edible or drinkable composition that comprises endoglucanase-treated yeast beta-1,3:1,6 glucans. In a still further aspect, the invention relates to the use of an edible or drinkable composition that comprises endoglucanase-treated yeast beta-1,3:1,6 glucans for improving the immune status of a mammalian or non-mammalian. Finally, the invention relates to the use of an edible or drinkable composition that comprises endoglucanase-treated yeast beta-1,3:1,6 glucans for decreasing the feed conversion ratio and/or increasing body weight in a non-human animal.

### BACKGROUND OF THE INVENTION

The spread of diseases in flocks of production animals like cattle or broilers gives rise to considerable losses in agricultural holdings. Diseased animals have to be treated and separated from the flocks, which creates considerable costs. Accordingly, the improvement of the immune status of production animals is of utmost importance. In former times, antibiotics have been administered to production animals, in particular to cattle, pigs and chicken, in order to prevent the outbreak of diseases. However, it was found that the use of antibiotics lead to the generation of resistant bacterial strains which can become a threat for human medicine. For this reason, the European Union banned avoparcin in 1997 and bacitracin, spiramycin and tylosin in 1999 from being used as growth-promoting additives.

Since then, considerable efforts have been made to improve the health status of production animals in other ways. For example, the use of prebiotics has provided promising results. Prebiotics are food ingredients which shall promote the growth or activity of lactic acid bacteria and other beneficial species in the gastro-intestinal tract. Prebiotics achieve their effects by altering the composition of flora of microorganisms in the gastrointestinal tract. Typically, they consist of non-digestible dietary fibers and oligosaccharides. The fibers pass undigested through the upper part of the gastrointestinal tract and stimulate the growth or activity of certain microorganisms in the colon by acting as a substrate for them. Numerous health-promoting effects have been ascribed to the use of prebiotics, amongst others, gut health maintenance, the prevention of colitis, cardiovascular diseases, or obesity.

Amongst other, β-glucans derived from fungi and yeast, which consist of a (1,3)-β-linked backbone with a small number of (1,6)-β-linked side chains, have been found to exert beneficial immune-modulating effects (Bohn JA& BeMiller (1995), Carbohydr Polym., 28(1) : 3-14). For this reason, β-glucans from yeast are used as feed additives. When piglets were fed with feed that included β-glucans from yeast, elevated immunoglobulin concentrations were found in the blood serum of these animals. Likewise, when using β-glucans from yeast as an additive in chicken feed, improved growth performance and gut health were observed. Food additives comprising β-glucans that seek to improve the health of humans are also commercially available. For example, the product Yestimun®, a spray-dried powder that comprises β-glucans from brewer's yeast and can be added to dairy products in order to support the function of the immune system.

Despite the efforts that have been made in the past to protect production animals from bacterial infections without antibiotics, it will be necessary to identify additional means and methods for effectively protecting production animals at acceptable costs without creating any issues for the animals or the surrounding environment.

### DESCRIPTION OF THE INVENTION

It has now been surprisingly found in the course of the present invention that by decomposing beta-1,3:1,6 glucans into smaller glucose oligosaccharide units, the health-promoting effects of beta-1,3:1,6 glucans can be further enhanced. When treating beta-1,3:1,6 glucans, in particular beta-1,3:1,6 glucans derived from yeast cell walls, with an endoglucanase, a composition is obtained which comprises a high amount of glucose oligosaccharides. Such composition has been found to be even more effective as a feed or food additive than intact beta-1,3:1,6 glucans. This is particularly surprising because it was known in the art that only intact beta-1,3:1,6 glucans, but not oligosaccharides, can be transported through the epithelial barrier in the intestine by microfold cells (M cells). The intake of the endoglucanase-treated glucans augments the function of the immune system and helps to reduce mortality in animal flocks. At the same time, the endoglucanase-treated glucans decrease the feed conversion ratio (FCR) and increase the body weight gain of production animals which are fed with such diet. Accordingly, the present invention provides new compositions comprising endoglucanase-treated beta-1,3:1,6 glucans, in particular yeast-derived beta-1,3:1,6 glucans, that are suitable for being used as additives for feed or food compositions.

Notably, a further interesting finding of the invention is that the glucose oligosaccharides resulting from endoglucanase treatment of beta-1,3:1,6 glucans appear not to act as prebiotics, as they achieve their health-promoting effect in considerably low concentrations. Prebiotics are typically compounds that are not digested when moving through the upper part of the gastrointestinal tract and serve as a substrate for bacteria in the large intestine, thereby stimulating the growth or activity of these bacteria. However, the glucose oligosaccharides according to the invention exert their health-promoting effect in concentrations that are much lower than those observed for known prebiotics which points to a different mode of action.

Thus, in a first aspect, the present invention refers to an edible or drinkable composition comprising endoglucanase-treated beta-1,3:1,6 glucans. Such composition is particularly suitable for use in a method of improving the immune status of an animal or human. The beta-1,3:1,6 glucans which serve as a starting material for endoglucanase treatment can be obtained from yeast or plants. Preferably, the beta-1,3:1,6 glucans which are subjected to endoglucanase treatment are beta-1,3:1,6 glucans derived from yeast, more preferably from the yeast cell wall.

According to the invention, the beta-1,3:1,6 glucans used for preparing the compositions of the invention preferably originate from yeast cells, e.g. from yeast cell walls. Notably, the type of yeast that is used for producing the beta-1,3:1,6 glucan material to be digested is not specifically limited. Yeast from different genera can be employed, such as yeast belonging to the genus Saccharomyces, such as S. cerevisiae, S. chevalieri, S. boulardii, S. bayanus, S. italicus, S. delbrueckii, S. rosei, S. microellipsodes, S. carlsbergensis, S. bisporus, S. fermentati, S. rouxii, and S. uvarum; yeast belonging to the genus Schizosaccharomyces, such as S. japonicus, S. kambucha, S. octosporus, and S. pombe; yeast belonging to the genus Hansenula, such as H. wingei, H. arni, H. henricii, H. americana, H. canadiensis, H. capsulata, or H. polymorpha; yeast belonging to the genus Candida, such as C. albicans, C. utilis, C. boidinii, C. stellatoidea, C. famata, C. tropicalis, C. glabrata, and C. parapsilosis; yeast belonging to the genus Pichia, such as P. pastoris, P. kluyveri, P. polymorpha, P. barkeri, P. cactophila, P. rhodanensis, P. cecembensis, P. cephalocereana, P. eremophilia, P. fermentans, and P. kudriavzevii; yeast belonging to the genus Kluyveromyces, such as K. marxianus; and yeast belonging to the genus Torulopsis, such as T. bovina, and T. glabrata.

In a particularly preferred embodiment, the yeast beta-1,3:1,6 glucans, e.g. the yeast cell wall, which is subjected to endoglucanase treatment is derived from Saccharomyces, more preferably from S. cerevisiae.

Yeast beta-1,3:1,6 glucans can be obtained by several routes. It is particularly preferred that the beta-1,3:1,6 glucans are derived from yeast cell walls. Yeast cell walls can be obtained by hydrolyzing yeast cells and harvesting the insoluble fraction of the hydrolyzed cells. Methods for hydrolysing yeast cells are known in the art and can include, e.g., incubating yeast cells with a protease. The insoluble fraction, contains significant amounts of beta-1,3:1,6 glucans, can be obtained by separating it from the soluble fraction, e.g., by centrifugation. If needed, the beta-1,3:1,6 glucans can be either further enriched or purified using common methods before enzyme treatment. Otherwise, the insoluble fraction can be subjected directly to enzyme treatment. Alternatively, it is also possible to purchase yeast beta-1,3:1,6 glucans from different manufacturers, e.g., Auxoferm® HCT from Ohly, Hamburg, Germany. These products can be used as substrate according to the invention.

The yeast beta-1,3:1,6 glucans are then subjected to treatment with an endoglucanase. In a preferred embodiment, the yeast beta-1,3:1,6 glucans are treated with an endo-1,3-beta-D-glucanase, i.e. an enzyme which catalyzes the endohydrolysis of 1,3-linkages in β-D-glucans. In another preferred embodiment, the beta-1,3:1,6 glucans are treated with an endo-β-1,3(4)-D-glucanase. This enzyme is capable of hydrolysing both β-1,3- and β-1,4-glycosidic bonds. Although beta-glucans from yeast cell wall do not contain 1,4-linkages, an endo-β-1,3(4)-D-glucanase can be used owing to its ability to split the 1,3-linkages. As used herein, the term endo-1,3-beta-D-glucanase is collectively used in the following to refer to endo-1,3-beta-D-glucanases, endo-β-1,3(4)-D-glucanases or other enzymes with endo-1,3-beta-D-glucanase activity. Suitable enzymes for use in the invention include, but are not limited to, endoglucanases from the classes EC 3.2.1.39 and EC 3.2.1.6.

The beta-1,3:1,6 glucan substrate is incubated with the endo-1,3-beta-D-glucanase under conditions that allow the enzymatic decomposition of the glucans. Conditions for enzyme reactions, and in particular endoglucanase reactions, are known to a skilled person. In particular, the incubation will normally take place at a temperature between 30-60°C, preferably 45-55°C, more preferably at 50-52°C and even more preferably 50°C. The pH will normally be in the range of 4-8, preferably 6-7, and more preferably in the range of 6.2-6.8. A pH of about 6.5 is most preferred. The reaction time will depend on several factors, e.g. the amount of glucan substrate added to the reaction, the amount of the endo-1,3-beta-D-glucanase added, and the desired chain length of the resulting glucose oligosaccharides. The enzyme will be incubated with the yeast cell wall substrate for a time sufficient for degrading the β-1,3-linkages in the β-glucans. The incubation time can be between 10 minutes and 48 hours, but it will normally be in the range of between 1-48 hours, such as between 2-36 hours, between 4-24 hours, or most preferably between 12-24 hours. The optimum conditions can be identified by the skilled person by routine experiments.

The amount of the endoglucanase enzyme that is used for the decomposition of the beta-1,3:1,6 glucans will vary dependent on the type of enzyme and the amount and purity of the cell wall fraction that is treated with the enzyme. Generally, the solution or suspension containing the yeast beta-1,3:1,6 glucan fraction can be concentrated or diluted before contacting the sample with the endo-1,3-beta-D-glucanase. For example, a cell wall sample can be adjusted to 10-15% (w/w) based on dry matter. The cell wall sample is then contacted with 0.01-5% (w/w) of the enzyme, preferably 0.1-5% (w/w), 0.3-5% (w/w), 0.3-1% (w/w). Stated differently, the enzyme is normally added in a concentration of between 0.1-10 U per g of the cell wall sample, preferably between 0.5-5 U per g of the cell wall sample, between 1-3 U per g of the cell wall sample, such as between 0.5-1.5 U per g of the cell wall sample. For example, the enzyme may be added in a concentration of between 1.2 U per g of the cell wall sample. As used herein, a unit (U) is defined as the amount of enzyme that produces 1 µmol of glucose per minute at a temperature of 50°C and a pH of 6.5.

The enzyme reaction can be stopped as soon as a desired degree of decomposition of the β-glucans is reached. To control hydrolysis, samples can be taken from the reaction mixture in defined time intervals, e.g. every 60 minutes, and the samples can be analyzed by HPLC to monitor the extent of degradation. Another possible method to control hydrolysis is to measure the amount of reducing sugars in the composition. The endo-1,3-beta-D-glucanase releases glucose oligosaccharides from the β-glucan substrate which increases the amount of reducing sugars in the composition. Preferably, the endo-1,3-beta-D-glucanase reaction is carried out until no further increase in the amount of reducing sugars is measured, i.e. no further hydrolysis takes place. The amount of reducing sugars can be measured in accordance with common methods described in the art. Preferably, the amount of reducing sugars is determined according to the dinitrosalicylic acid method described in the below Example 4. The method is based on the use of dinitrosalicylic acid which is converted to 3-amino-nitrosalicylic acid. The absorbance of the latter is determined and is a measure for the amount of reducing sugars.

According to the invention, the composition comprises at least 3.0 g reducing sugars per 100 g dry matter of the composition. Preferably, the composition comprises at least 3.5 g, at least 4.0 g, at least 4.5 g, at least 5.0 g, at least 5.5 g, or at least 6.0 g reducing sugars per 100 g dry matter of the composition. The above mentioned amount of reducing sugars completely results from the decomposition of the β-glucans and not from mono- or oligosaccharides that were externally added to the composition. In a preferred embodiment, the composition of the invention contains no externally added reducing sugars, i.e. sugars like mono- or oligosaccharides which do not result from the enzymatic decomposition of the β-glucans.

The endo-1,3-beta-D-glucanase used according to the invention theoretically cleaves the beta-1,3-linked glucose backbone of a glucan at every fifth glucose residue, thereby releasing glucose pentaose oligosaccharides. As β-glucans comprise both 1,3-linkages and branching points with 1,6 linkages, the enzyme is not capable of hydrolyzing in the direct vicinity of branching points. As a result, the glucose oligosaccharides resulting from the endo-1,3-beta-D-glucanase reaction include not only glucose pentaoses, but also larger oligosaccharides comprising, e.g. between 5-200, between 5-100, between 5-50, or between 5-25 1,3-linked glucose residues.

According to the invention, it is preferred that the beta-1,3:1,6 glucans are treated with the endo-1,3-beta-D-glucanase enzyme such that the resulting composition comprises a high amount of glucose oligosaccharides having a molecular weight (MW) of below 150 kDa, more preferably below 100 kDa, and even preferably below 50 kDa. Preferably, the edible or drinkable composition of the invention will comprise more than 60% (w/w), preferably more than 70% (w/w), more than 80% (w/w), more than 90% (w/w) or more than 95% (w/w) glucose oligosaccharides having a molecular weight (MW) of below 150 kDa, based on dry matter of the composition as a whole. More preferably, the edible or drinkable composition of the invention will comprise more than 60% (w/w), preferably more than 70% (w/w), more than 80% (w/w), than 90% (w/w) or more than 95% (w/w) glucose oligosaccharides having a molecular weight (MW) of below 100 kDa, based on dry matter of the composition as a whole. Even more preferably, the edible or drinkable composition of the invention will comprise more than 60% (w/w), more preferably more than 70% (w/w), more than 80% (w/w), than 90% (w/w) or more than 95% (w/w) glucose oligosaccharides having a molecular weight (MW) of below 50 kDa, based on dry matter of the composition as a whole.

In a preferred embodiment, the endoglucanase enzyme used for decomposing the yeast beta-1,3:1,6 glucan fraction is an endo-β-1,3-D-glucanase that naturally occurs in a Streptomyces species. It is particularly preferred herein that the endo-β-1,3-D-glucanase used in the methods of the invention comprises or consists of the sequence set forth in SEQ ID NO:1. This sequence reflects the amino acid sequence of the endo-β-1,3-D-glucanase that naturally occurs in *Streptomyces coelicolor* A3. It is of course possible to use variants of the enzyme depicted in SEQ ID NO:1 as long as these variants have retained a substantial part of the β-1,3-hydrolyzing activity. For example, if a variant of the enzyme of SEQ ID NO:1 is used which includes several amino acid substitutions, care must be taken that these substitutions do not result in a significant loss of the hydrolyzing activity.

The enzymes or enzyme variants to be used must be enzymatically active, which means that they have retained at least part of the β-1,3-hydrolyzing activity of the enzyme depicted in SEQ ID NO:1. Preferably, the endo-β-1,3-D-glucanase to be used according to the invention has retained 50%, 60%, 70%, 80%, 90%, 95%, 96%, 97%, 98%, or 99% of the β-1,3-hydrolyzing activity of the enzyme set out in SEQ ID NO:1. Routine methods that allow a comparison of the activity of a variant endo-β-1,3-D-glucanase with the endo-β-1,3-D-glucanase of SEQ ID NO:1 are known and include, for example, measuring the amount of β-D-glucan which is decomposed by a defined amount of enzyme per time unit.

Active variants of the enzyme having the amino acid sequence of SEQ ID NO:1 may include sequence differences relative to the amino acid sequence of SEQ ID NO:1. Variants of the amino acid sequence of SEQ ID NO:1 typically differ from the sequence of SEQ ID NO:1 by one or more deletions, substitutions or additions of amino acids within the polypeptide of SEQ ID NO:1. Accordingly, one or more amino acids of the enzyme in SEQ ID NO:1 may be substituted or deleted as long as such modification does not or not significantly impair the β-1,3-hydrolyzing activity of the resulting variant. Generally, any amino acid residue of the amino acid sequence shown in SEQ ID NO:1 can be replaced by a different amino acid, provided that the resultant variant is still an enzyme with β-1,3-hydrolyzing activity. In particular, the enzyme depicted in SEQ ID NO:1 may be modified by the substitution of a total of 1, 2, 3, 4, 5, 6, 7, 8, 9, 10, 15, 20, 25, 30, 35, 40, or 45 amino acids, and in some embodiments even in up 50 amino acids of the endo-β-1,3-D-glucanase depicted in SEQ ID NO:1. Preferably, these substitutions are not relevant for the enzymatic activity of the polypeptide.

It is particularly preferred that substitutions are conservative substitutions, i.e. substitutions of one or more amino acid residues by an amino acid of a similar polarity, which acts as a functional equivalent. Preferably, the amino acid residue used as a substitute is selected from the same group of amino acids as the amino acid residue to be substituted. For example, a hydrophobic residue can be substituted with another hydrophobic residue, or a polar residue can be substituted with another polar residue having the same charge. Functionally homologous amino acids, which may be used for a conservative substitution comprise, for example, non-polar amino acids such as glycine, valine, alanine, isoleucine, leucine, methionine, proline, phenylalanine, and tryptophan. Examples of uncharged polar amino acids comprise serine, threonine, glutamine, asparagine, tyrosine and cysteine. Examples of charged polar (basic) amino acids comprise histidine, arginine and lysine. Examples of charged polar (acidic) amino acids comprise aspartic acid and glutamic acid.

The amino acids, which can be used for replacing the respective amino acids in the naturally occurring endo-β-1,3(4)-D-glucanase are generally not limited to specific amino acids. In principle, any other proteinogenic or non-proteinogenic amino acid may be used for substituting the naturally occurring amino acid in the respective position of the endo-β-1,3-D-glucanase. Preferably, the amino acids found in the original endo-β-1,3-D-glucanase can be replaced by any other naturally occurring, proteinogenic amino acids. As used herein, proteinogenic amino acids are those 23 amino acids, which are regularly found in naturally occurring polypeptides. Preferably, the amino acids are L-amino acids. However, also D-amino acids may be useful for replacing the amino acids in the original polypeptide of SEQ ID NO:1.

Alternatively, the amino acids used for replacing the amino acids in the naturally occurring endo-β-1,3-D-glucanase may be non-proteinogenic amino acids, i.e. amino acids, which are not found in naturally occurring polypeptides. These non-proteinogenic amino acids include, for example, α-aminoadipic acid, β-aminoadipic acid, α-aminobutyric acid, α-aminoisobutyric acid, β-alanine, 4-aminobutyric acid, 5-aminovaleric acid, 6-aminohexanoic acid, 8-aminooctanoic acid, 9-aminononanoic acid, 10-amino¬decanoic acid, 12-aminododecanoic acid, α-aminosuberic acid, β-cyclohexylalanine, citrulline, dehydroalanine, α-cyclohexylglycine, propargylglycine, pyroglutamic acid, 4-benzoylphenylalanine, δ-hydroxylysine, 4-hydroxyproline, alloisoleucine, lanthionine (Lan), norleucine, norvaline, ornithine, phenylglycin, pipecolic acid, sarcosine, 1,2,3,4-tetrahydro-isochinoline-3-carboxylic acid, allo-threonine, thiazolidine-4-carboxylic acid, γ-aminobutyric acid (GABA), iso-cysteine, diaminopropionic acid, 2,4-diaminobutyric acid, 3,4-diaminobutyric acid, biphenylalanine and 4-fluorophenylalanine. Also included by the term "non-proteinogenic amino acids" are derivatives of the above-mentioned proteinogenic amino acids wherein a side-chain has been modified, for example, by a methylene group, thereby providing e.g. homomethionine, homoserine, homoproline, homothreonine, homotryptophane, homotyrosine, homohistidine and homolysine.

Polypeptides which differ from the sequence depicted in SEQ ID NO:1 by the insertion of one or more additional amino acids are also considered variants in the context of the present invention. Such insertions can be made at any position of the polypeptide shown in SEQ ID NO:1. Similarly, variants also include polypeptides in which one or more amino acids have been deleted relative to the polypeptide shown in SEQ ID NO:1. In principle, such deletions can be applied to any amino acid position of the sequence of SEQ ID NO:1.

According to the invention, the variant of the sequence of SEQ ID NO:1 shows a high degree of sequence identity with the sequence of SEQ ID NO:1. The amino acid identity will be at least about 80%, 85%, 90%, 91%, 92%, 93%, 94%, 95%, 96%, 97%, 98% or 99% when compared in an optimal alignment, for example, by the program BESTFIT using standard parameters. For example, a sequence identity of 90% means that 90% of the amino acids of an analyzed amino acid sequence stretch are identical to the sequence of the reference amino acid sequence depicted in SEQ ID NO:1. Methods and computer programs for determining amino acid sequence identity are well known in the art.

Also encompassed by the invention are active fragments of the endo-β-1,3-D-glucanase shown in SEQ ID NO:1 as well as fragments of the above-described variants of the endo-β-1,3-D-glucanase shown in SEQ ID NO:1, provided that these fragments are enzymatically active. Enzymatically active fragments of the sequence shown in SEQ ID NO:1 or its variants are polypeptides that differ from the amino acid sequence shown in SEQ ID NO:1 or from the respective variant sequence by the absence of one or more amino acids at the N-terminus and/or the C-terminus of the polypeptide. For example, a fragment of the sequence of SEQ ID NO:1 may differ from the sequence of SEQ ID NO:1 by the lack of about 5, 10, 15, 20, 25, 30, 35, 40, 45 or 50 amino acids at the N-terminus and/or the C-terminus, provided that such fragment retains at least a part of the enzymatic activity of the original full-length endo-β-1,3-D-glucanase depicted in SEQ ID NO:1. Likewise, a fragment of a variant of SEQ ID NO:1 may differ from said variant sequence by the lack of about 5, 10, 15, 20, 25, 30, 35, 40, 45 or 50 amino acids at the N-terminus and/or the C-terminus, provided that the fragment still has endo-β-1,3-D-glucanase activity.

The composition obtained after treating the yeast beta-1,3:1,6 glucans with the endoglucanase enzyme can be formulated for direct oral administration to the mammal, preferably a human. Where the composition is for human use, it can have the form of a pharmaceutical composition. Such a composition can be prepared by methods well known in the prior art. Such methods are described, for example, in "Remington: The Science and Practice of Pharmacy", Lippincott Williams & Wilkins; 21st Edition (2005).

The compositions may have the form of solid compositions, for example, granules, powders, tablets or capsules. These compositions may be prepared, for example, by mixing the glucose oligosaccharides resulting from the enzymatic decomposition of the yeast beta-1,3:1,6 glucans with other excipients or carriers. Suitable excipients and carriers include microcrystalline cellulose, methyl cellulose, hydroxypropyl methyl cellulose, casein, albumin, mannitol, dextran, sucrose, lactose, sorbitol, starch, agar, alginates, pectins, collagen, glycerides or gelatin. Compositions for oral administration may comprise antioxidants, like ascorbic acid, tocopherol or cysteine, lubricants, like magnesium stearate, preservatives, like paraben or sorbic acid, taste enhancers, disintegrants, binders, thickeners, dyes and similar substances.

Liquid formulations may also be prepared. For example, the glucose oligosaccharides resulting from the enzymatic decomposition of the glucans may be formulated, for example, as an emulsion, syrup, suspension or solutions. These formulations can be prepared using oil, water, alcohol, or combinations thereof as a sterile liquid carrier. Suitable surfactants, suspending agent, oils or emulsifiers may be added. Suitable oils for use in liquid dosage forms include, for example, olive oil, sesame oil, peanut oil, rapeseed oil and corn oil. Suitable alcohols include ethanol, isopropyl alcohol, hexadecyl alcohol, glycerol and propylene glycol. Suspensions may further comprise fatty acid esters, such as ethyl oleate, isopropyl myristate, fatty acid glycerides and acetylated fatty acid glycerides.

Alternatively, the composition obtained after treating the yeast beta-1,3:1,6 glucans, e.g. the beta-1,3:1,6 glucans derived from the yeast cell walls with the endoglucanase can be prepared as an additive that is mixed into a food or feed composition. Therefore in another aspect, the invention relates to an edible or drinkable composition which is a food or feed product.

The composition can be formulated for administration to a human subject. Humans of all ages will profit from intake of the glucose oligosaccharides resulting from the enzymatic decomposition of the yeast beta-1,3:1,6-glucans. However, it is expected young children will particularly benefit from the health-stimulating of the glucose oligosaccharides. Accordingly, it will be preferred that the human to be treated is between 1-5 years old, more preferably between 1-3 years old. The composition for administration to a human will be effective in increasing the immune status. As described above, the glucose oligosaccharides can be formulated in the form of a tablet or capsule. Alternatively, the glucose oligosaccharides can be added as a food additive to food or beverage products. The food or beverage products which are modified by the addition of glucose oligosaccharides are not particularly limited. In principle, all different types of food or beverage items can be supplemented with the glucose oligosaccharides. Suitable food products include, but are not limited to, dairy products, such as yoghurts, or milk drinks, baked goods, such as bread or biscuits, fruit preparations, tomato ketchups, sauces, condiments, breakfast cereals, and the like. It is particularly preferred that the food product is a dairy product, more preferably a yogurt, drinking yogurt, buttermilk, or kefir. Alternatively, the glucose oligosaccharides can be edited to beverages, including, but are not limited to, fruit juices, lemonades, energy and sport drinks, teas, coffees, caffeinated or caffeine-free soft drinks, and the like. In the final food or drink composition, the glucose oligosaccharides will be contained in a concentration of between 1-5000 mg/kg of the feed, preferably 5-1000 mg/kg, 10-500 mg/kg, or 20-150 mg/kg, such as 30-100 mg/kg of the food or drink composition.

Alternatively, the composition can be formulated as a feed supplement for administration to a non-human animal, for example, a pet or farm animal, e.g. a cow, a pig, a sheep, a horse, a dog, a cat, a rabbit, a mouse, a hamster or a rat. Furthermore, the animal can be a bird, such as a chicken, a broiler, or a turkey. In yet another embodiment, that animal can be a fish or shrimp. Examples of suitable fishes include salmon, carp and pangasius. When the composition of the invention is to be used as a feed supplement, the composition can be formulated as a complete feed comprising the required amount of glucose oligosaccharides. For example, complete feed can be based on cereals or oilseeds, and it can optionally contain enzymes, feed additives and/or betaine. Alternatively, the feed can be formulated as an additive that is mixed with a feed prior to giving same to the animal. When using the composition of the invention as an additive, the glucose oligosaccharides contained therein will be much higher concentrated than in the final feed composition. In the final feed composition, the glucose oligosaccharides will be contained in a concentration of between 1-5000 mg/kg of the feed, preferably 5-1000 mg/kg, 10-500 mg/kg, or 20-250 mg/kg, such as 50-200 mg/kg or 20-100 mg/kg of the feed.

In another aspect, the present invention relates to a method for decreasing the feed conversion ratio and/or increasing body weight in a non-human animal, such as an animal mentioned above, said method comprising feeding the non-human animal with an edible or drinkable composition as described elsewhere herein that comprises endoglucanase-treated yeast glucans. The non-human animals whose feed conversion ratio is to be decreased are preferably farm animals, more preferably selected from the group consisting of cow, pig, sheep, horses and poultry. In another aspect, the non-human animal whose feed conversion ratio is to be decreased is a fish or shrimp.

In another aspect, the invention relates to the use of an edible or drinkable composition comprising endoglucanase-treated yeast cell wall for improving the immune status of a human or animal. In still another aspect, the invention relates to the use of an edible or drinkable composition comprising endoglucanase-treated yeast cell wall for decreasing the feed conversion ratio and/or increasing body weight in a non-human animal.

Finally, the invention also relates to a method for producing an edible or drinkable composition of the present invention, such as a food or feed composition. Accordingly, the invention relates to a method for producing an edible or drinkable composition comprising endoglucanase-treated beta-1,3:1,6 glucans, said method comprising:
(a) providing a composition that comprises beta-1,3:1,6 glucans;
(b) incubating said composition with an endoglucanase, such as an endo-1,3-beta-glucanase, an endo-β-1,3(4)-D-glucanase or another enzyme with endo-1,3-beta-D-glucanase activity until the composition comprises at least 3.0 g reducing sugars per 100 g dry matter of the composition.

The method may further comprise an optional step in which the composition is formulated as a feed or food product.

The method preferably results in an edible or drinkable composition which comprises at least at least 3.0 g, at least 3.5 g, at least 4.0 g, at least 4.5 g, at least 5.0 g, at least 5.5 g, or at least 6.0 g reducing sugars per 100 g dry matter of the composition. The above mentioned amount of reducing sugars completely results from the decomposition of the β-glucans and not from mono- or oligosaccharides that were externally added to the composition. In a preferred embodiment, the composition of the invention contains no externally added reducing sugars, i.e. sugars like mono- or oligosaccharides which do not result from the enzymatic decomposition of the β-glucans.

Where the composition is a food or drink composition, the glucose oligosaccharides will be contained in the final food or drink product in a concentration of between 1-5000 mg/kg of the feed, preferably 5-1000 mg/kg, 10-500 mg/kg, or 20-150 mg/kg, such as 30-100 mg/kg of the food or drink composition.

Where the composition is a feed composition, the glucose oligosaccharides will be contained in the final feed product in a concentration of between 1-5000 mg/kg of the feed, preferably 5-1000 mg/kg, 10-500 mg/kg, or 20-250 mg/kg, such as 50-200 mg/kg or 20-100 mg/kg of the feed.

As described elsewhere herein, the beta-1,3:1,6 glucans used in step (a) of the method are preferably derived from yeast, more preferably from yeast cell walls.

The above method preferably results in an edible or drinkable composition that comprises more than 60% (w/w), more preferably more than 70% (w/w), more than 80% (w/w), more than 90% (w/w) or more than 95% (w/w) glucose oligosaccharides having a molecular weight (MW) of below 150 kDa, based on dry matter of the composition as a whole. More preferably, the edible or drinkable composition resulting from the above method will comprise more than 60% (w/w), more preferably more than 70% (w/w), more than 80% (w/w), than 90% (w/w) or more than 95% (w/w) glucose oligosaccharides having a molecular weight (MW) of below 100 kDa, based on dry matter of the composition as a whole. Even more preferably, the edible or drinkable composition resulting from the above method will comprise more than 60% (w/w), more preferably more than 70% (w/w), more than 80% (w/w), than 90% (w/w) or more than 95% (w/w) glucose oligosaccharides having a molecular weight (MW) of below 50 kDa, based on dry matter of the composition as a whole.

The endoglucanase used in the above method may be an endo-1,3-beta-glucanase, an endo-β-1,3(4)-D-glucanase or another enzyme with endo-1,3-beta-D-glucanase activity, as described elsewhere herein in the context with the composition of the invention. Preferably, the endo-1,3-beta-glucanase comprises or consists of the sequence set forth in SEQ ID NO:1.

### BRIEF DESCRIPTION OF THE FIGURES

Fig. 1 shows the result of a size exclusion separation using the 3G-GlOS yeast cell wall product obtained in Example 1. It can be seen that the product contains a high amount of beta 1,3:1,6-linked oligosaccharides having 5-200 glucose units.
Fig. 2 shows the results of measuring the mortality of broiler fed with diets that were supplemented with 1G-YCW and 3G-GlOS. (1) Negative control, (2) positive control (Narasin), (3) 250 mg/kg 1G-YCW, (4) 1000 mg/kg 1G-YCW, (5) 62.5 mg/kg 3G-GlOS, (6) 250 mg/kg 3G-GlOS, (7) 1000 mg/kg 3G-GlOS.
Fig. 3 shows the European Production Efficiency Factor (EPEF) of the different diets that were supplemented with 1G-YCW and 3G-GlOS. The factor was calculated using average daily gain, liveability and FCR.
Fig. 4 shows the results of measuring the total oocyst counts per gram of faecal material from broiler fed with diets that were supplemented with 3G-GlOS and BG.
Fig. 5 shows the results of measuring the amount of reducing sugars solubilized in the supernatant after endoglucanase treatment of yeast cell walls. The amount is expressed as g reducing sugar per litre.

The following examples illustrate various embodiments of the invention. It will be understood that the invention is not limited by the examples.

### EXAMPLES

### Example 1: Preparation of 1G and 3G yeast cell walls

For the preparation of 1G yeast cell walls, cream yeast was inactivated for 2 hours at 90°C. 1.0 g/l of protease Protin PC-10 (Daiwa Kasei) was added, and the reaction was incubated for 10 hours at 40°C. The enzyme was inactivated for 40 seconds at 140°C, and the cell walls were separated from the intracellular matter by centrifugation. The cell walls (pellet) were washed 4 times with process water. The washed pellet contains the hydrolyzed yeast cell walls (= 1G YCW).

For the preparation of 3G yeast cell walls, 1G YCW with a dry matter of 10-13% were heated to 50°C and the pH was adjusted to 6.5 using NaOH. Subsequently 0.3 % (in regard to the dry matter of yeast cell wall cream) Denazyme GEL-L1/R enzyme (laminarinase) was added and the mixture was incubated at 50°C for 18 h. The pH was not adjusted during the reaction. After 18 h, the enzyme reaction was stopped by heat inactivation, and the resulting product was spray dried (= 3G-GlOS).

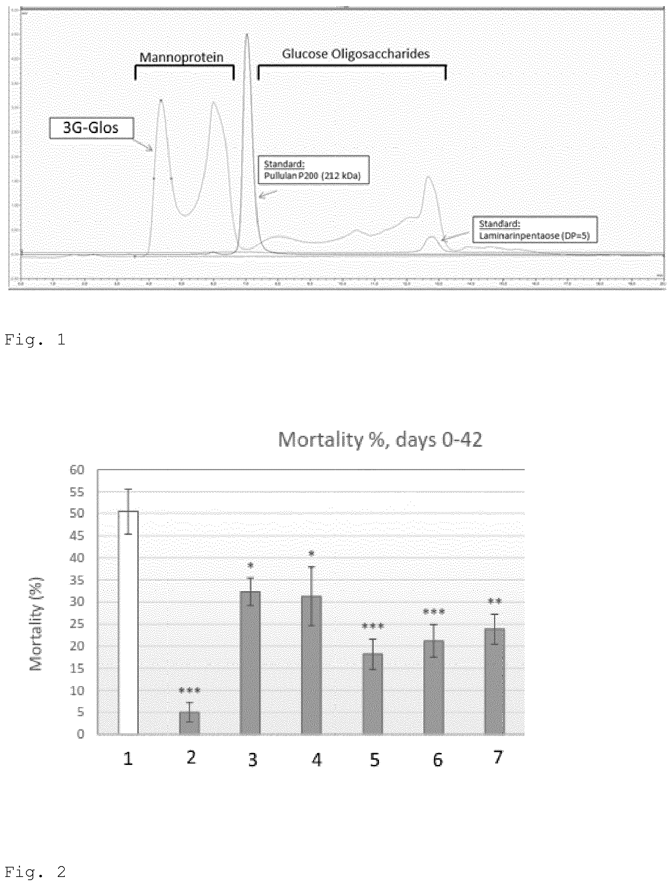

The molecular size distribution of the molecules present in the 3G-GlOS product was analyzed by HPLC-Size Exclusion Chromatography. 3G-GlOS was dissolved in water to a concentration of 1% (w/v), filtered, and 20 µl of this solution was analyzed on a PPS Proteema (100Å, 5 µm) column (Supplier: Polymer Standards Service) using purified water as the eluent at a flow rate of 1 ml/min. Compounds were detected by refractive index detection. The results of the size exclusion chromatography are shown in Figure 1.

### Example 2: Effect of 3G-GlOS on broilers exposed to a Clostridium perfringens challenge

The objective of this experiment was to evaluate 1G YCW and 3G-GlOS on broiler chicken performance, intestinal health and microbiota under necrotic enteritis (NE)-challenged conditions.

The diets were wheat-soy based feeds for broiler chicks and formulated as shown in Table 1. The starter formulation was used during the first 3 weeks and the grower diet for the last 3 weeks of the trial. The starter diets were prepared as 2 mm and the grower diet as 4 mm pellets.

616 healthy broilers of the breeding strain Ross 308 with an initial weight of between 40-45 g were grown for a period of 42 days at a stocking density of about 1.125 animals per m². Conditions were 18 hours light at 20 lx followed by 6 hours darkness. The temperature was 32°C at the beginning of the trial and was gradually decreased to 22°C.

As a positive control (PC), a commercial diet containing Monteban (ionophore) and Narasin (coccidiostat and antibiotic) was used. As a negative control, a diet without the addition of any YCW products was used. The diets to be tested were modified by the addition of the following yeast products:
- 250 mg/kg 1G-YWC,
- 1000 mg/kg 1G-YWC,
- 62.5 mg/kg 3G-GlOS,
- 250 mg/kg 3G-GlOS,
- 1000 mg/kg 3G-GlOS.

**Table 1. Basic control diet.**

| | Starter % (d 0-21) | Grower % (d 21-42) |
|---|---|---|
| Wheat | 58.79 | 64.36 |
| Soybean meal 48 | 33.17 | 26.00 |
| Sunflower oil | 3.57 | 5.85 |
| Monocalciumphosphate | 1.34 | 1.07 |
| Limestone | 1.47 | 1.24 |
| NaCl | 0.42 | 0.38 |
| Mineral premix* | 0.20 | 0.20 |
| Vitamin premix** | 0.20 | 0.20 |
| DL-Methionine | 0.32 | 0.27 |
| L-Lysine HCl | 0.26 | 0.22 |
| Threonine | 0.16 | 0.11 |
| Inert | 0.10 | 0.10 |
| Total | 100 | 100 |

| | | |
|---|---|---|
| *) Contents of the mineral premix: calcium 296.8 g/kg, iron 12.5 g/kg, copper 4 g/kg, manganese 25 g/kg, zinc 32.5 g/kg, iodine 0.225 g/kg, selenium 0.1 g/kg. **) Contents of the vitamin premix: calcium 331.3 g/kg, vitamin A 6000000 IU, vitamin D3 2250000 IU, vitamin E 30000, tocopherol 27270 mg/kg, vitamin K3 1505 mg/kg, vitamin B1 1257.3 mg/kg, vitamin B2 3000 mg/kg, vitamin B6 2009.7 mg/kg,, vitamin B12 12.5 mg/kg, biotin 75 mg/kg, folic acid 504 mg/kg, niacin 20072 mg/kg, pantothenic acid 7506,8 mg/kg. | | |

On day 14, the chicks were individually inoculated with 5000 oocysts of *E. maxima* (Biopharm, Czech Republic). The size of inoculum providing a clear but subclinical effect on performance was chosen. The oocysts were suspended in tap water one day before inoculation to improve the excystation efficiency. Oocysts were pipetted into the beak of each chick in 200 nl of suspension, which the chicks could easily swallow.

On day 18, each broiler chicken was orally inoculated with a fresh culture of *Cl*. *perfringens* (0.5-1 x 10⁹ live cells) . The strain of *Cl. perfringens* was originally isolated from ileal contents of NE-affected broiler chicks. The strain has been repeatedly found to cause NE provided that the chickens are sensitized by *E. maxima* challenge.

The chicks were weighed on days 0, 14, 21 and 42. Correspondingly, feed intake per pen and the feed conversion ratio (FCR) were measured for the following periods:
- Days 0-14, early starter diet period and the period before challenges
- Days 14-21, late starter diet period and the period of *E*. *maxima* and *Cl. perfringens* inoculations
- Days 21-42, grower diet period and the recovery period after inoculations

On days 21 and 42, two birds from all pens were euthanised, abdominal cavity opened, blood samples taken by cardiac puncture and jejunum, ileum and paired caeca were removed. Jejunum was opened for scoring NE lesions using scale from 0 to 6 as described by Shojadoost et al. (Veterinary Research 2012, 43:74). Ileal and caecal digesta samples were collected during the trial and stored for possible later analysis. From three pens only one or no birds were euthanized on day 21 due to high mortality.

Results: Regarding mortality, the results are shown in Table 2. It can be seen that there was no effect of the diet on mortality prior to the NE challenge (days 0-14). Overall mortality was quite high and the *C. perfringens* infection was more severe than expected. It can be seen that the feeding of YCWs was effective in reducing mortality. The strongest reduction was clearly achieved with the 3G-GlOS. The results of the mortality measurement between days 0-42 is shown in Fig. 2. The figure shows (1) the negative control, (2) the positive control (Narasin), (3) a diet with 250 mg/kg 1G-YCW, (4) a diet with 1000 mg/kg 1G-YCW, (5) a diet with 62.5 mg/kg 3G-GlOS, (6) a diet with 250 mg/kg 3G-GlOS, and (7) a diet with 1000 mg/kg 3G-GlOS.

**Table 2: Mortality of broilers fed with YCWs and exposed to a C. perfringens challenge on day 14 post-hatch and raised until day 42 post-hatch. PI=day post-inoculation with 5,000 oocysts of Eimeria maxima and 4 days later orally inoculated with a fresh culture of C. perfringens (0.5-1.0 x 10⁹ living cells).**

| Trt | Diet | Dose, mg/kg | Mortality, % | | | | | |
|---|---|---|---|---|---|---|---|---|
| | | | d0-14 | d14-21 | d0-21 | d21-42 | d14-42 | d0-42 |
| | | | -14 PI | + 7 PI | | | + 28 PI | |
| 1 | NC | 0 | 1.01 | 48.48^{a} | 49.50^{a} | 1.85 | 50.34^{a} | 51.35^{a} |
| 2 | PC | 0 | 0.00 | 2.02^{e} | 2.02^{e} | 3.86 | 5.88^{e} | 5.88^{d} |
| 3 | 1G-YCW | 250 | 0.00 | 31.31^{b} | 31.31^{b} | 1.85 | 33.16^{bc} | 33.16^{bc} |
| 4 | 1G-YCW | 1000 | 0.00 | 28.28^{bc} | 28.28^{bc} | 6.22 | 34.50^{b} | 34.50^{b} |
| 5 | 3G-GlOS | 62.5 | 1.01 | 14.14^{d} | 15.15^{d} | 4.01 | 18.15^{de} | 19.16^{cd} |
| 6 | 3G-GlOS | 250 | 0.00 | 19.19^{cd} | 19.19^{bcd} | 4.48 | 23.67^{bcd} | 23.67^{bc} |
| 7 | 3G-G1OS | 1000 | 1.14 | 22.73^{bcd} | 23.86^{bcd} | 0.00 | 22.73^{bcd} | 23.86^{bc} |
| | | SEM | 0.89 | 4.28 | 4.49 | 2.51 | 4.92 | 5.12 |
| | | Diet P value | 0.5404 | <0.0001 | <0.0001 | 0.1131 | <0.0001 | <0.0001 |

Regarding body weight gain, the results are shown in Table 3. There was no effect of diet on initial body weight (BW, P=0.22) of 42 g. Feeding YCWs pre-challenge had a significant effect on BW gain, without influencing food intake (FI). Post-challenge, YCWs at the lower doses increased BW gain above that of the NC, but it wasn't until day 21-42 that BW gain was comparable to the PC in birds fed 3G-GlOS at the lowest doses. Overall, the supplementation of 3G-GlOS during a NE challenge decreased mortality compared to the NC.

**Table 3: Body weight gain of broilers fed YCWs and exposed to a C. perfringens challenge on day 14 post-hatch and raised until day 42 post-hatch. PI=day post-inoculation with 5,000 oocysts of Eimeria maxima and 4 days later orally inoculated with a fresh culture of Clostridium perfringens (0.5-1.0 x 10⁹ living cells).**

| Trt | Diet | Dose, mg/kg | Body weight gain, g | | | | | |
|---|---|---|---|---|---|---|---|---|
| | | | d 0-14 | d 14-21 | d 0-21 | d 21-42 | d 14-42 | d 0-42 |
| | | | -14 PI | + 7 PI | | | + 28 PI | |
| 1 | NC | 0 | 514.7^{a} | 307.3^{d} | 822.0^{c} | 2249.1^{c} | 2556.4^{c} | 3071.1^{c} |
| 2 | PC | 0 | 507.8^{ab} | 593.2^{a} | 1101.1^{a} | 2568.9^{a} | 3162.1^{a} | 3669.9^{a} |
| 3 | 1G-YCW | 250 | 505.1^{abc} | 366.3^{bc} | 871.4^{bc} | 2393.8^{bc} | 2760.2^{b} | 3265.2^{b} |
| 4 | 1G_YCW | 1000 | 515.3^{a} | 344.2^{bcd} | 859.5^{bc} | 2356.9^{bc} | 2700.9^{bc} | 3217.4^{bc} |
| 5 | 3G-GlOS | 62.5 | 481.7^{d} | 359.7^{bc} | 841.5^{c} | 2414.7^{abc} | 2774.4^{b} | 3256.2^{b} |
| 6 | 3G-GlOS | 250 | 486.7^{cd} | 357.9^{bc} | 844.7^{bc} | 2433.0^{ab} | 2790.9^{b} | 3277.6^{b} |
| 7 | 3G-GlOS | 1000 | 493.3^{bcd} | 336.2^{cd} | 829.5^{c} | 2329.6^{bc} | 2665.8^{bc} | 3159.1^{bc} |
| | | SEM | 7.17 | 16.45 | 19.77 | 61.83 | 65.33 | 65.17 |
| | | Diet P value | 0.0070 | < 0.0001 | < 0.0001 | 0.0554 | < 0.0001 | < 0.0001 |

Regarding feed conversion ratio (FCR), it can be seen that mortality-corrected FCR was influenced by diet and day with a decrease in FCR in birds fed 3G-GlOS compared to the NC, with the lowest 3G-GlOS dosage resulting in the highest improvement in FCR, see Table 4.

**Table 4: Feed conversion ratio of broilers fed YCWs and exposed to a Clostridium perfringens challenge on day 14 post-hatch and raised until day 42 post-hatch. PI=day post-inoculation with 5,000 oocysts of Eimeria maxima and 4 days later orally inoculated with a fresh culture of C. perfringens (0.5-1.0 x 10⁹ living cells).**

| Trt | Diet | Dose, mg/kg | Mortality corrected feed conversion ratio, g:g | | | | | |
|---|---|---|---|---|---|---|---|---|
| | | | d 0-14 | d 14-21 | d 0-21 | d 21-42 | d 14-42 | d 0-42 |
| | | | -14 PI | + 7 PI | | | + 28 PI | |
| 1 | NC | 0 | 1.141^{d} | 1.359^{ab} | 1.211^{abc} | 1.828^{a} | 1.780^{a} | 1.670^{a} |
| 2 | PC | 0 | 1.155^{d} | 0.989^{c} | 1.064^{d} | 1.713^{cd} | 1.577^{c} | 1.518^{d} |
| 3 | 1G-YCW | 250 | 1.162^{cd} | 1.251^{b} | 1.193^{bc} | 1.778^{abc} | 1.708^{ab} | 1.620^{abc} |
| 4 | 1G-YCW | 1000 | 1.152^{d} | 1.270^{ab} | 1.189^{c} | 1.731^{bcd} | 1.671^{b} | 1.585^{bc} |
| 5 | 3G-GlOS | 62.5 | 1.181^{bc} | 1.475^{a} | 1.297^{a} | 1.673^{d} | 1.689^{b} | 1.577^{cd} |
| 6 | 3G-GlOS | 250 | 1.212^{a} | 1.381^{ab} | 1.277^{ab} | 1.751^{abcd} | 1.711^{ab} | 1.634^{3bc} |
| 7 | 3G-GlOS | 1000 | 1.207^{ab} | 1.436^{ab} | 1.288^{a} | 1.776^{abc} | 1.731^{ab} | 1.647^{ab} |
| | | SEM | 0.009 | 0.077 | 0.030 | 0.033 | 0.032 | 0.023 |
| | | Diet P value | < 0.0001 | 0.0027 | < 0.0001 | 0.0491 | 0.0029 | 0.0003 |

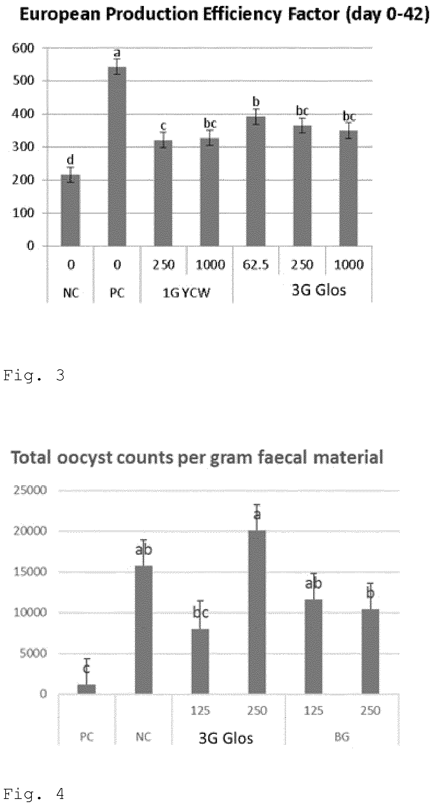

Due to the different effects of the YCWs on mortality, BW gain and FCR pre- and post-NE challenge, it is complicated to determine which parameter is most important and which YCW source performs best. Therefore, the European Production Efficiency Factor was calculated: EPEF = (average grams gain/day x % livability)/FCR x 10. The EPEF is generally used to compare results between different flocks and different regions using a standardized formula. The results are presented in Figure 3. It can be seen that overall, the 3G-GlOS have a more positive effect than the 1G YCW or NC, and that the lowest dosage of 3G-GlOS gave the best results.

### Example 3: Effect of 3G-GlOS and beta-glucans on broilers exposed to coccidia vaccine

The objective of this experiment was to evaluate the effect of 3G-GlOS and beta-glucan diets fed to animals that were exposed to a coccidia vaccine. For this purpose, 2000 healthy broilers of the breeding strain Cobb 500 with an initial weight of between 38-45 g were grown for a period of 42 days at a stocking density of about 0.93 animals per m². Conditions were 20 hours light at 20 lx followed by 4 hours darkness. The temperature was 29.5°C at the beginning of the trial and was gradually decreased to 22°C.

As a positive control (PC), a commercial diet containing Monteban (ionophore) and Narasin (coccidiostat and antibiotic) was used. As a negative control, a diet without the addition of any YCW products was used. The diets to be tested were based on the negative control that was modified by the addition of
- 125 mg/kg 3G-GlOS,
- 250 mg/kg 3G-GlOS,
- 125 mg/kg BG,
- 250 mg/kg BG

After 14 days, the animals were infected with *Eimeria* oocysts. Eimeria oocysts are ingested by the bird and invade the intestinal cells to undergo various stages of their lifecycle where they multiply, burst out, and re-invading the cells to cause damage to cellular integrity. The oocysts are eventually excreted in the faeces to be re-ingested by the bird. The Eimeria lifecycle can take 5-7 days, and an initial growth check is expected approximately 1 week post-vaccination and again at 21 days, as birds are exposed to a higher number of oocysts which activates a protective immune response. The overall effect is costly to growth and FCR and can lead to secondary infections such as Clostridum perfringens, the causative agent of necrotic enteritis.

Results: It was found that supplementing broiler diets with 3G-GlOS at 125 mg/kg, FCR and EPEF comparable to birds fed a coccidiostat (data not shown). In addition 3G-GlOS at 125 mg/kg reduced total oocysts counts. The results are depicted in Figure 4. 3G-GlOS treated broilers contained a lower total oocyst count than BG treated broilers. Moreover, the lowest 3G-GlOS dose, resulted in the strongest reduction in total oocyst counts.

**Table 4: Eimeria oocysts per gram of faecal material from 21-day old birds exposed to 2x dose of live coccidia vaccine¹ and fed 3G-GlOS or B-glucans from hatch. ¹Coccivac-B52 (Merck Animal Health) contains live occysts of Eimeria acervulina (duodenum), maxima (jejunum), mivati (duodenum) and tenella (ileum). ²Basal diet supplemented with Robenz (Zoetis, US) coccidiostat at 33 mg/kg.**

| Diet | Dose, mg/kg | Acervulina / g faeces | Maxima / g faeces | Tenella / g faeces | Total / g faeces |
|---|---|---|---|---|---|
| Positive control² | 0 | 258.5^{b} | 800.5^{c} | 133.4 | 1192.4^{c} |
| Negative control | 0 | 9196.4^{a} | 1375.5^{bc} | 5160.9 | 15732.9^{ab} |
| 3G-GlOS | 125 | 5060.9^{ab} | 1150.6^{bc} | 962.4 | 7994.4^{bc} |
| 3G-GlOS | 250 | 9938.4^{a} | 2192.8^{ab} | 5519.5 | 20076.9^{a} |
| B-glucan (BG) | 125 | 6303.3^{a} | 2993.3^{a} | 2326.3 | 11622.5^{ab} |
| B-glucan (BG) | 250 | 5035.9^{ab} | 1467.4^{bc} | 2959.8 | 10413.8^{b} |
| | SEM | 2078.5 | 486.0 | 1661.0 | 3216.7 |
| | Diet P-value | 0.0628 | 0.0154 | 0.2103 | 0.0071 |

The results are also depicted in Fig. 4.

The above examples were also performed with pigs and piglets and similar results were achieved.

### Example 4: Quantifications of reducing sugars in the 3G-GlOS product

The 3G-GlOS product was prepared as described in Example 1. Briefly, 1G YCW with a dry matter of 10-13% were heated to 50°C and the pH was adjusted to 6.5 using NaOH. Subsequently 0.3 % (in regard to the dry matter of yeast cell wall cream) Denazyme GEL-L1/R enzyme (laminarinase) was added and the mixture was incubated at 50°C for 18 h. The pH was not adjusted during the reaction. During the reaction, samples were taken and analyzed in view of the amount of reducing sugars using a slightly amended version of the method described in Wood et al. (2012), Biomass and Bioenergy, vol. 44, pages 117-121. Briefly, the dinitrosalicylic acid (DNSA) reagent was prepared in the same way and in the same concentrations that was described by Wood et al. (2012) . However, the reaction was performed in Eppendorf tubes (end volume 750 µL), and not in 96-well plates as described by Wood. The sample and DNSA were mixed 1:2 (250 µL sample + 500 µL DNSA reagent). The mixture was incubated at 99.5°C for 5 min in a water bath and subsequently centrifuged at 5,000 rpm for 5 min. The supernatant was obtained and diluted 10 times before measuring absorbance at a wavelength of 530 nm. Reference samples were prepared by following all steps except heating. The absorbance of the reference sample was determined and subtracted from the absorbance of the reacted sample to eliminate unspecific turbidity.

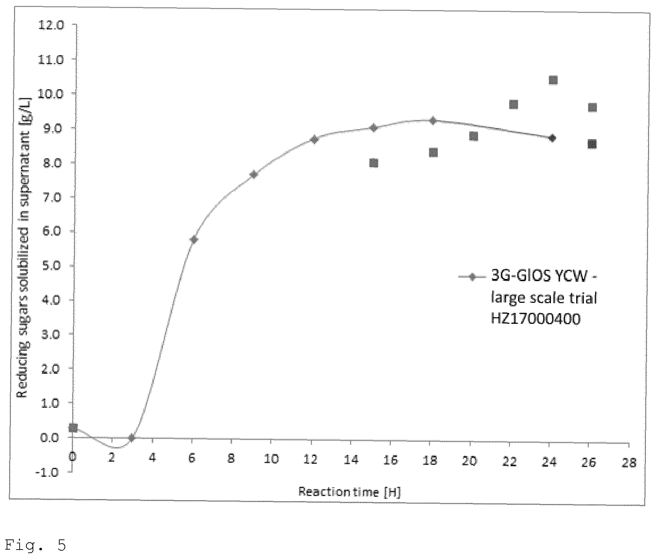

The results are shown in Figure 5. It can be seen that the 3G-GlOS product comprises up to 9 g/L reducing sugars in the supernatant. Drawn to the amount of cell wall material, this amounts to about 5.0-7.5 g reducing sugar/100 g cell wall material. This range was confirmed in further pilot trials.

## Claims

1. Edible or drinkable composition comprising endoglucanase-treated beta-1,3:1,6 glucans, wherein said composition comprises at least 3.0 g reducing sugars per 100 g dry matter of the composition.

2. Edible or drinkable composition of claim 1, wherein said composition comprises at least 5.0 g reducing sugars per 100 g dry matter of the composition.

3. Edible or drinkable composition of claims 1-2, wherein said composition is a food or feed product.

4. Edible or drinkable composition according to any of claims 1-3, wherein said composition comprises glucose oligosaccharides in an amount of 1-300 mg/kg of the composition, preferably 10-200 mg/kg, and more preferably 20-100 mg/kg of the composition.

5. Edible or drinkable composition according to any of claims 1-4, wherein said beta-1,3:1,6 glucans are derived from yeast.

6. Edible or drinkable composition according to claim 5, wherein said beta-1,3:1,6 glucans are derived from yeast cell walls.

7. Edible or drinkable composition according to any of claims 1-4, wherein said composition comprise more than 60% (w/w) glucose oligosaccharides having a molecular weight (MW) of below 150 kDa, based on dry matter of the composition.

8. Edible or drinkable composition according to any of claims 1-7, wherein said yeast beta-1,3:1,6 glucans have been treated with an endo-1,3-beta-glucanase, an endo-β-1,3(4)-D-glucanase or another enzyme with endo-1,3-beta-D-glucanase activity.

9. Edible or drinkable composition according to claim 8, wherein said endo-1,3-beta-glucanase comprises or consists of the sequence set forth in SEQ ID NO:1.

10. Edible or drinkable composition according to any of claims 1-9 for use in a method of improving the immune status of an animal or human.

11. Method for decreasing the feed conversion ratio and/or increasing body weight in a non-human animal, comprising feeding the non-human animal with an edible or drinkable composition according to any of claims 1-9.

12. Method according to claim 11, wherein said non-human animal is selected from the group consisting of cow, pig, sheep, horses, fish, shrimp and poultry.

13. Use of an edible or drinkable composition according to any of claim 1-9 for improving the immune status of a human or animal.

14. Use of an edible or drinkable composition according to any of claim 1-9 for decreasing the feed conversion ratio and/or increasing body weight in a non-human animal.

15. Method for producing an edible or drinkable composition comprising endoglucanase-treated beta-1,3:1,6 glucans, said method comprising:
(a) providing a composition that comprises beta-1,3:1,6 glucans;
(b) incubating said composition with an endoglucanase, such as an endo-1,3-beta-glucanase, an endo-β-1,3(4)-D-glucanase, or another enzyme with endo-1,3-beta-D-glucanase activity until the composition comprises at least 3.0 g reducing sugars per 100 g dry matter of the composition.
